Europäisches Patentamt

European Patent Office

Office européen des brevets

(11) Veröffentlichungsnummer: **0 306 786**
**B1**

(12) **EUROPÄISCHE PATENTSCHRIFT**

(45) Veröffentlichungstag der Patentschrift: **30.01.91**

(51) Int. Cl.⁵: **F 16 L 3/20**

(21) Anmeldenummer: **88114013.1**

(22) Anmeldetag: **27.08.88**

(54) Konstanthänger.

(30) Priorität: 22.09.87 DE 8712738 u
08.09.87 DE 8712160 u

(43) Veröffentlichungstag der Anmeldung:
15.03.89 Patentblatt 89/11

(45) Bekanntmachung des Hinweises auf die
Patenterteilung:
30.01.91 Patentblatt 91/05

(84) Benannte Vertragsstaaten:
DE FR GB IT

(56) Entgegenhaltungen:
DE-A-2 903 010
DE-A-3 315 698
DE-B-2 162 305
DE-B-2 855 978
FR-A-2 286 330

(73) Patentinhaber: IWK Regler und Kompensatoren
GmbH
Singerstrasse
D-7513 Stutensee (DE)

(72) Erfinder: Holzhausen, Wieland, Dr.
Ernstring 8
D-8351 Auerbach (DE)
Erfinder: Rogg, Hermann
Blumenstrasse 17
D-7513 Stutensee 1 (DE)
Erfinder: Jäger, Jürgen
Waldhornstrasse 4
D-7500 Karlsruhe 1 (DE)

(74) Vertreter: Dr.-Ing. Hans Lichti Dipl.-Ing. Heiner
Lichti Dipl.-Phys. Dr. Jost Lempert
Postfach 41 07 60 Durlacher Strasse 31
D-7500 Karlsruhe 41 (DE)

**Beschreibung**

Die Erfindung betrifft einen Konstanthänger für eine Last mit mindestens einer Führungskurve und einer an dieser derart angreifenden und durch diese belasteten Feder, daß die der Last entgegenwirkende Federkraftkomponente am Lastangriffspunkt die Last im wesentlichen kompensiert.

Bei warm gehenden Rohrleitungen werden elastische Unterstützungen und Aufhängungen vorgesehen, um die Rohrleitungslasten zu tragen, ohne aber Wärmedehnung und hierdurch bedingte Lageveränderungen der Rohre zu behindern. Diese sollen unabhängig von dem Wärmezustand und damit ihrer Lage mit konstanter Kraft gehalten werden. Hierzu werden eine möglichst konstante Tragkraft ausübende elastische Tragvorrichtung, sogenannte Konstanthänger vorgesehen.

Die FR—A—22 86 330 zeigt einen Konstanthänger mit einer oder mehreren orts- und richtungs fest angeordneten Federn, auf deren freien Ende eine axial verschiebbare, die Last tragende Führungskurve sitzt. Die Vorrichtung benötigt Führungselemente zur linearen Führung von Führungskurve und mit dem freien Ende der Feder verbundenen Federkolben sowie gegebenenfalls schwenkbeweglich zwischen Führungskurven und Federn gelagerte Hebel und ist daher insgesamt aufwendig.

Die DE—A—29 03 010 zeigt eine Aufhängevorrichtung für Rohrleitungen mit einer orts- und richtungs fest angeordneten Feder, deren freies Ende mit einem Zugband verbunden ist, welches über eine Nockenkurve mit teils spiralförmigem wirksamen Umfang geführt ist. Die Nockenscheibe sitzt auf einer drehbaren Achse, an der das andere Ende des Zugbandes festgelegt ist. Auf der gleichen Achse sitzt eine Scheibe mit kreisbogenförmigem Umfang, über die ein weiteres Zugband geführt ist, welches einerseits an der Scheibe befestigt ist und andererseits an seinem freien Ende die Last trägt. Die Nockenscheiben bilden demgemäß Hebelarme, wobei die erstgenannte Nockenscheibe einen mit der Drehstellung veränderlichen Hebelarm bildet. Hierdurch soll eine Vergleichmäßigung der progressiven Federkraft über die bewirkte Änderung der Hebelarme ermöglicht werden. Die Feder wird daher in keiner Weise durch die Nockenscheibe bzw. die durch diese gebildete Führungskurve selbst, sondern lediglich durch die am Band hängende Last belastet, deren Kraftwirkung auf die Feder lediglich durch das Hebelarmsystem umgesetzt wird.

Der Erfindung liegt die Aufgabe zugrunde, einen einfach ausgebildeten Konstanthänger zu schaffen, der eine hohe Konstantheit über den Bewegungsweg einer angehängten Last bei einfacher Ausgestaltung gewährleistet.

Erfindungsgemäß wird die genannte Aufgabe durch einen Konstanthänger der eingangs genannten Art gelöst, welcher dadurch gekennzeichnet, daß die Feder mit einem Ende unmittelbar durch die Führungskurve geführt ist und daß bei Lageveränderung der Last Feder und Führungskurve relativ zueinander verschwenkbar sind.

Erfindungsgemäß kann grundsätzlich durch eine einzige, mit einer Führungskurve zusammenwirkenden Druck- oder Zugfeder, vorzugsweise Spiralfeder über die Länge der Führungskurve einer einer angehängten Last entgegenwirkende Kraft erzeugt werden, indem die sich bei der Bewegung über die Führungskurve verändernde Kraft der Feder in gleicher Weise durch die im jeweiligen Berührungspunkt von Kurve und Feder senkrecht zur.

Kurve stehende Führungskraft derselben teilweise kompensiert wird. Die Erfindung geht davon aus, daß die Feder mit einem freien Ende unter (Druck- oder Zug-) Spannung direkt durch die Führungskurve geführt wird und daß dabei in jedem Angriffspunkt der Feder an der Führungskurve unter Berücksichtigung der Last ein Kräftegleichgewicht und zwar sowohl in Richtung der Last, also in vertikaler Richtung, als auch senkrecht hierzu gegeben sein muß. Unter der weiteren genannten Voraussetzung, daß die kompensierende Führungskraft bei Reibungsfreiheit auf dem Wegelement im Angriffspunkt der Feder senkrecht steht, läßt sich in jedem Falle eine Differentialgleichung aufstellen, die problemlos in numerischer Weise lösbar ist.

In bevorzugter Ausgestaltung ist vorgesehen, daß mindestens ein Fixpunkt von Feder oder Führungskurve in Anpassung an die zu tragende Last einstellbar ist. Hierdurch kann erreicht werden, daß ein vorgegebener Konstanthänger mit einer bestimmten Feder und einer bestimmten dieser zugeordneten Kurvenscheibe, an unterschiedliche Lasten angepaßt werden kann. Hierdurch wird erreicht, daß für einen bestimmten Lastbereich nur ein Konstanthänger eingesetzt werden kann und nicht jeweils für eine bestimmte Last extra ein Konstanthänger ausgelegt werden muß.

In weiterer bevorzugter Ausgestaltung ist vorgesehen, daß die Last an einem gegen die Führungskurve drückenden Ende der Feder angehängt ist, wobei weiterhin die Feder mit ihrem dem Anhängepunkt für die Last entgegengesetzten Ende relativ zur Führungskurve stationär, aber schwenkbar angelenkt ist. Dabei kann in einer Ausgestaltung vorgesehen sein, daß die Führungskurve ortsfest angeordnet ist; eine äußerst bevorzugte Ausgestaltung zeichnet sich aber dadurch aus, daß die Führungskurve an einer stationären Achse schwenkbar angelenkt ist. Hierdurch können Horizontalbewegungen des Kraftangriffspunktes weitgehend vermieden werden, indem so der Drehpunkt der Feder pendelnd aufgehängt wird.

Statt einer Anlenkung am freien Ende der Feder sieht eine weitere Ausgestaltung vor, daß die Last an der Führungskurve angehängt ist und die Feder lediglich linear zusammenpreßbar und ausdehnbar angeordnet ist.

Während grundsätzlich nur eine Feder erforderlich ist, kann auch eine symmetrische Anordnung mit zwei Federn und entsprechenden Kurvenscheiben gewählt werden. Dies, wenn zur Aufnahme einer großen

2

EP 0 306 786 B1

Last Federn mit geringeren Kräften eingesetzt werden sollen, als diese von einer einzigen Feder aufzubringen wären. Auch hier bleibt die der angehängten Last entgegenwirkende verbleibende Kraft jeder Feder selbst über den Weg der Führungskurve konstant, auch wenn sie einzeln eben nur einen Teil der Gesamtlast kompensiert.

Während die Federn vorzugsweise komprimiert werden und als Druckfedern eingesetzt werden, kann grundsätzlich auch im Dehnungsbereich der Federn gearbeitet werden, wobei diese also durch die Führungskurve auf Zug beansprucht werden.

Die Erfindung bietet den Vorteil, daß weder ein Hebelsystem oder Federbänder zur Kraftumlenkung noch kompensierende Zusatzfedern erforderlich sind, da die Federkraft durch die Führung direkt teilweise so kompensiert wird, daß die der Last entgegenwirkende Kraft über den Bewegungsweg konstant bleibt.

Weitere Vorteile und Merkmale der Erfindung ergeben sich aus den Ansprüchen und aus der nachfolgenden Beschreibung, in der Ausführungsbeispiele der Erfindung unter Bezugnahme auf die Zeichnungen im einzelnen erläutert sind. Dabei zeigt:

Fig. 1 eine schematische Darstellung des erfindungsgemäßen Konstanthängers;

Fig. 2 eine konstruktive Ausgestaltung eines bevorzugten Ausführungsbeispiels eines erfindungsgemäßen Konstanthängers in Vorderansicht;

Fig. 3 einen Schnitt entlang II-II der Figur 2;

Fig. 4 eine schematische Darstellung einer anderen Ausgestaltung eines Konstanthängers;

Fig. 5 ein weiterer Konstanthänger in schematischer Darstellung; und

Fig. 6 eine schematische Darstellung einer symmetrischen Doppelfederanordnung entsprechend zweier kombinierter Anordnungen der Figur 2.

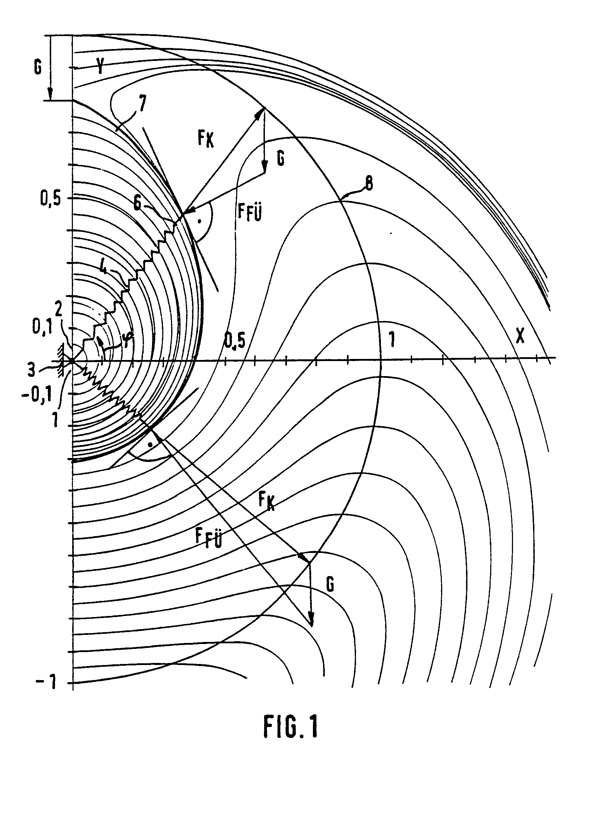

Die Fig. 1 zeigt eine an einem stationären Drehpunkt 1 mit ihrem ersten Ende 2 um eine horizontale Achse 3 schwenkbar angelenkte Feder 4 dargestellt. Das dem ersten Ende 2 abgewandte Ende 6 der Feder 4 wird durch eine Kurvenscheibe 7 geführt, die derart ausgebildet ist, daß die Summe von Federkraft E, der einer vorgegebenen Last entsprechenden Gewichtskraft G und der von der Kurve 7 in jedem ihrer Punkte auf die von ihr geführte Feder 4 ausgeübte Führungskraft F, die im jeweiligen Angriffspunkt des Endes 6 der Feder 4 an der Kurve 7 senkrecht zur Tangente an dieser steht, Null ergibt, also die Differenz von Federkraft und Führungskraft gerade immer der konstanten Gewichtskraft G gleich ist. In der Figur ist weiterhin gestrichelt die entspannte Federlänge 8 eingezeichnet, bei der die Federkraft dann Null wäre.

Die Führungskurve 7 genügt der Gleichung

$$dY/dX = -(K\ L\ X\ (R-1)) / (R + (K\ L/G)\ Y\ (R-1)). \tag{1}$$

Die Größen sind hierbei normiert, wobei X die auf die entspannte Federlänge L normierte Länge der Feder in X-Richtung, Y die entsprechende normierte Länge in Y-Richtung und R die absolute momentane normierte Federlänge ist. K bezeichnet die Federkonstante.

In Polarkoordinaten lautet die Gleichung

$$dR/d\varphi = -R\ \cos\varphi / (\sin\varphi + (K\ L/G)\ (R - 1)). \tag{2}$$

Dabei ist

$$\varphi = \arctan(Y/X). \tag{3}$$

Wie der Figur 1 entnehmbar ist, ist bei vorgegebener Last und vorgegebener Feder, damit vorgegebenem Verhältnis von KL/G, — im dargestellten Ausführungsbeispiel beträgt dieses Verhältnis 5 — eine Schar von möglichen Führungskurven 7 gegeben, von denen eine Feder mit einer entspannten Länge entsprechend dem normierten Radius 1 innerhalb dieses Radiuses komprimiert, außerhalb gedehnt wird. Weiterhin nimmt der Führungskurvenradius für Bahnkurven, die mit einem positiven Wert auf der Y-Achse kleiner als 1 — G/(KL) beginnen, ab, während für größere Y-Werte der Radius zunimmt. Dazwischen liegt ein Gebiet mit sichelförmigen Führungskurven, auf welchem die Feder je nach Angriffspunkt auf Zug und auf Druck beansprucht werden kann. Die optimale Führungskurve ist durch die untere Grenzkurve des sichelförmigen Gebiets gegeben, die in der Fig. 1 mit 7 bezeichnet ist. Hier ist die Änderung der Federkraft selbst bei maximalem vertikalen Bewegungsbereich (in Y-Richtung) am geringsten, wie aus der Figur 1 entnehmbar ist.

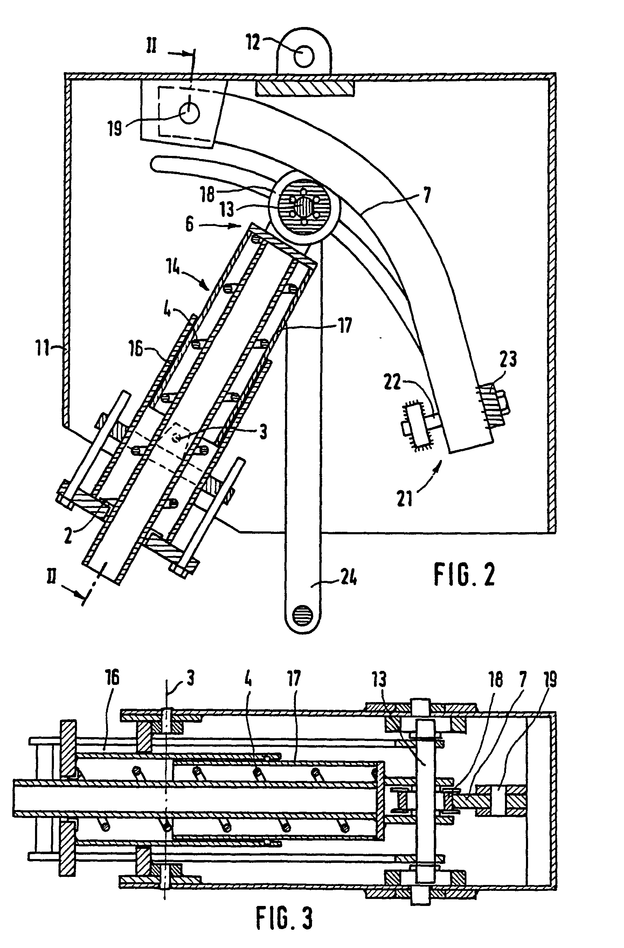

Wie in der Fig. 2 dargestellt ist, ist der relativ zu einem Gehäuse 11 feste Drehpunkt 3 der Feder 4 über das Gehäuse 11 und mit diesem bei 12 pendelnd aufgehängt. Hierdurch werden Horizontalbewegungen des Lastangriffspunktes 13 am Ende 6 der Feder 4 weitgehend vermieden. Bei üblicherweise gegebener hinreichend großer Pendellänge wird auch diese Änderung noch hinreichend genau durch die vorstehenden Gleichungen beschrieben.

Die konstruktive Ausgestaltung der Fig. 2 zeigt also ein Gehäuse 11, das bei 12 pendelnd ortsfest angehängt ist und in dem sich die gesamte Konstanthänger-Anordnung befindet. Die Feder 4 befindet sich in einer Kolben-Zylinder-Einheit 14 mit einem Zylinder 16 und einem in dieser geführten Kolben 17, der im Zylinder 16 geführt ist. Der mit dem Ende 2 der Feder verbundene Kolben 16 ist bei 3 schwenkbar am Gehäuse 11 angelenkt, während der Kolben 17 an seinem freien Ende eine Führungsrolle 18 trägt, die durch die Kurve 7 geführt ist. Die Kurve 7 ist einerseits mit ihrem ersten Ende drehbar im Gehäuse angelenkt, während ihr freies Ende 21 entgegen der durch die Feder 4 beaufschlagten Rolle 18 unter einer

3

Drehbewegung der Führungsbahn 7 um die Anlenkung 19 mittels einer auf einem Gewinde 22 geführten Mutter 23 einstellbar ist. Hierdurch kann ein vorgegeben, gefertigter Konstanthänger in einem gewissen Bereich an unterschiedliche Lasten angepaßt und daher bei verschiedenen Lasten eingesetzt werden. Am Anlenkpunkt 13 der Führungsrolle 18 für die Last ist ein Arm 24 schwenkbar angelenkt, an dem die aufzuhängende Last selbst angehängt werden kann.

Unterliegt ein von Konstanthängern der dargestellten Art gehaltenes Rohrsystem Lageänderungen aufgrund von Temperaturänderungen und bewegt sich hierdurch der Aufhängepunkt 13 der Last entlang der Führungskurve 7 nach unten, so bleibt der der Last entgegenwirkende, durch die Führungskurve 7 nicht aufgenommene Anteil der Kraft aufgrund der Ausgestaltung der Führungskurve 7 immer konstant und insbesondere gleich der angehängten Last. Die Erfindung geht dabei davon aus, daß die Summe der einwirkende Kräfte, Federkraft, Gewichtskraft und durch die Führungskurve als Reaktionskraft auf die Federkraft bedingte Führungskraft die Kräfte gleichgewichtig kompensieren und zwar sowohl hinsichtlich der der Gewichtskraft parallelen Vertikalkomponente als auch der Horizontalkomponente, da ansonsten sich der Aufhängepunkt entlang der Führungskurve bewegen würde. Aufgrund dieser Voraussetzung sowie des Umstandes, daß die Führungskraft (bei Reibungsfreiheit) senkrecht zum Wegelement im Angriffspunkt der Führungsrolle an der Führungsbahn steht, lassen sich die o.g. Gleichungen ableiten, die in bekannter Weise numerisch lösbar sind.

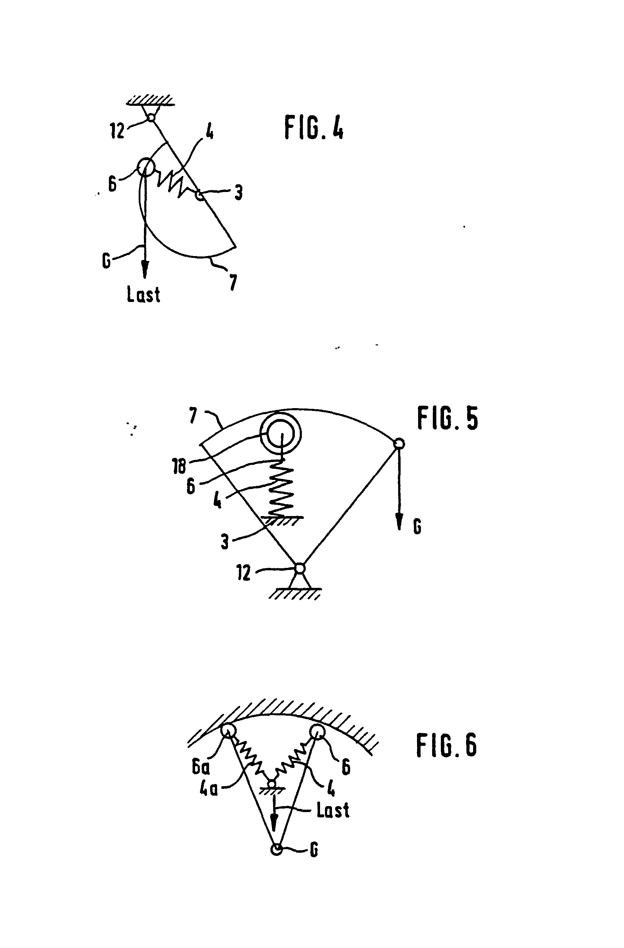

Eine mit der Ausgestaltung der Fig. 2, 3 vergleichbare weitere Ausgestaltung eines Konstanthängers ist in der Figur 4 dargestellt. Auch hier ist die Führungskurve 7 bei 12 schwenkbar aufgehängt. Die Feder 4 ist einerseits an einem mit der Führungskurve 7 festen Ort 3 angelenkt und andererseits mit ihrem entgegengesetzten Ende 6 entlang der Führungskurve 7 geführt, wobei am Ende 6 die Last G angreift.

Bei der Ausgestaltung der Fig. 5 ist die Feder 4 nicht schwenkbar und mit ihrem ersten Ende 3 raumfest angeordnet, während eine raumfest bei 12 angelenkte Führungskurve 7 über die mit dem freien Ende 6 der Feder 4 verbundene Führungsrolle 18 verschwenkbar ist und wobei an der Führungskurve 7 die Last G angehängt ist.

Die Ausgestaltung der Fig. 6 zeigt eine symmetrische Doppelfederanordnung. Hierbei sind zwei Anordnungen ähnlich der Fig. 1 vorgesehen und spiegelsymmetrisch zueinander angeordnet. Die Last G ist an den beiden freien Enden 6, 6a der Federn 4, 4a angehängt. Diese Ausgestaltung unterscheidet sich bis auf die Verdoppelung der Federn, wodurch mit schwächeren Federn größere Lasten getragen werden können, grundsätzlich nicht von der Ausgestaltung der Fig. 1.

**Patentansprüche**

1. Konstanthänger für eine Last (G) mit mindestens einer Führungskurve (7) und einer an dieser derart angreifenden und durch diese belasteten Feder (4), daß die der Last (G) entgegenwirkende Federkraftkomponente am Lastangriffspunkt (13) die Last (G) im wesentlichen kompensiert, dadurch gekennzeichnet, daß die Feder (4) mit einem Ende (6) unmittelbar durch die Führungskurve (7) geführt ist und daß bei Lageveränderung der Last (G) Feder (4) und Führungskurve (7) relativ zueinander verschwenkbar sind.

2. Konstanthänger nach Anspruch 1, dadurch gekennzeichnet, daß mindestens ein Fixpunkt von Feder (4) oder Führungskurve (7) in Anpassung an die zu tragende Last (G) einstellbar ist.

3. Konstanthänger nach Anspruch 1 oder 2, dadurch gekennzeichnet, daß die Last (G) an einem gegen die Führungskurve (7) drückenden Ende (6) der Feder (4) angehängt ist.

4. Konstanthänger nach Anspruch 3, dadurch gekennzeichnet, daß die Feder (4) mit ihrem dem Anhängepunkte (6) für die Last (G) entgegengesetzten Ende (3) relativ zur Führungskurve (7) stationär, aber schwenkbar angelenkt ist.

5. Konstanthänger nach einem der Ansprüche 1 oder 2, dadurch gekennzeichnet, daß die Last (G) direkt an der Führungskurve (7) angehängt ist und die Feder (4) lediglich linear zusammenpreßbar und ausdehnbar angeordnet ist.

6. Konstanthänger nach einem der vorangehenden Ansprüche, dadurch gekennzeichnet, daß die Last (G) an zwei entsprechend einem der vorangehenden Ansprüche geführten Anlenkpunkten (6) angehängt ist.

**Revendications**

1. Système de suspension constante pour une charge (G), avec au moins une came de guidage (7) et un ressort (4) fixé sur et chargé par celle-ci de telle façon que la composante de la force du ressort s'opposant à la charge (G) compense sensiblement la charge (G) au point d'application de la charge (13), caractérisé en ce que l'une des extrémités (6) du ressort (4) est guidée directement part la came de guidage (7), et que, en cas de changement de position de la charge (G), le ressort (4) et la came de guidage (7) peuvent pivoter l'un par rapport à l'autre.

2. Système de suspension constante selon la revendication 1, caractérisé en ce qu'au moins un point fixe du ressort (4) ou de la came de guidage (7) peut être réglé en fonction de la charge (G) à porter.

3. Système de suspension constante selon l'une des revendications 1 ou 2, caractérisé en ce que la charge (G) est suspendue à une extrémité (6) du ressort (4) poussant contre la came de guidage (7).

# EP 0 306 786 B1

4. Système de suspension constante selon la revendication 3, caractérisé en ce que l'extrémité (3) du ressort (4) opposée au point de suspension (6) pour la charge (G) est montée de manière stationnaire par rapport à la came de guidage (7), mais de façon à pouvoir pivoter.

5. Système de suspension constante selon l'une des revendications 1 ou 2, caractérisé en ce que la charge (G) est suspendue directement à la came de guidage (7) et que le ressort (4) est monté de façon à permettre seulement une compression et une extension linéaires.

6. Système de suspension constante selon l'une des revendications précédentes, caractérisé en ce que la charge (G) est suspendue en deux points d'articulation (6) guidés selon l'une des revendications précédentes.

## Claims

1. Constant hanger for a load (G) with at least one guide curve (7) and a spring (4) acting thereon and loaded thereby in such a way that the spring tension component on the load application point (13) opposing the load (G) substantially compensates the latter, characterized in that one end (6) of the spring (4) is directly guided by the guide curve (7) and that on modifying the position of the load (G) the spring (4) and the guide curve (7) are pivotable relative to one another.

2. Constant hanger according to claim 1, characterized in that at least one fixed point of the spring (4) or the guide curve (7) is adjustable so as to adapt to the load (G) to be carried.

3. Constant hanger according to claims 1 or 2, characterized in that the load (G) is hung on an end (6) of the spring (4) pressing against the guide curve (7).

4. Constant hanger according to claim 3, characterized in that the end (3) of the spring (4) opposite to the hanging point (6) for the load (G) is stationary relative to the guide curve (7), but is pivotably articulated.

5. Constant hanger according to one of the claims 1 or 2, characterized in that the load (G) is hung directly on the guide curve (7) and the spring (4) is merely linearly compressible and expandable.

6. Constant hanger according to one of the preceding claims, characterized in that the load (G) is hung on two articulation points (6) guided in accordance with one of the preceding claims.

FIG.1

FIG. 2

FIG. 3

FIG.4

12
4
6
3
G
Last
7

FIG.5

7
18
6
4
3
12
G

FIG.6

6a
4a
6
4
Last
G